# EUROPEAN PATENT APPLICATION

(11) **EP 4 332 709 A1**
(43) Date of publication of application: **06.03.2024**
(21) Application number: 22192619.9
(22) Date of filing: 29.08.2022
(51) Int. Cl.: G05D 1/00

(54) **CONTROLLING A MOBILE MINING VEHICLE**

(71) Applicant: Sandvik Mining and Construction Oy, 33330 Tampere (FI)
(72) Inventor: LIIKANEN, Henri, 33311 Tampere (FI); PUURA, Jussi, 33311 Tampere (FI); AHA, Liisa, 33311 Tampere (FI); KUIVANEN, Ilkka, 33311 Tampere (FI)
(74) Representative: Sandvik

(57) **Abstract**

An apparatus, method and computer program product for: determining information on a first state of a plurality of predefined states of the mobile mining vehicle, determining, based on the first state, a plurality of state transition options for transitioning the mobile mining vehicle from the first state to a second state of the plurality of predefined states of the mobile mining vehicle, determining contextual information associated with the plurality of state transition options, controlling, based on the plurality of state transition options and the contextual information associated with the plurality of state transitions options, provision of at least one control element on a user interface for controlling the mobile mining vehicle, and controlling a transition of the mobile mining vehicle from the first state to the second state based on a user input received via the at least one control element.

## Description

### TECHNICAL FIELD

The present application relates generally to controlling a mobile mining vehicle processing. More specifically, the present application relates to controlling a transition of the mobile mining vehicle from a first state to a second state.

### BACKGROUND

Mobile mining vehicles are configured to perform different operations, and an operator of a mobile mining vehicle may need to monitor and control the mobile mining vehicle based on a large amount of information. For example, a rock drilling rig may comprise a plurality of booms provided with rock drilling units capable of simultaneous drilling, and therefore, several drilling events may be in progress at the same time. When the operator is controlling a fleet of mobile mining machines the flow of information is even larger.

### SUMMARY

Various aspects of examples of the invention are set out in the claims. The scope of protection sought for various embodiments of the invention is set out by the independent claims. The examples and features, if any, described in this specification that do not fall under the scope of the independent claims are to be interpreted as examples useful for understanding various embodiments of the invention.

According to a first aspect of the invention, there is provided an apparatus comprising means for determining information on a first state of a plurality of predefined states of the mobile mining vehicle, determining, based on the first state, a plurality of state transition options for transitioning the mobile mining vehicle from the first state to a second state of the plurality of predefined states of the mobile mining vehicle, determining contextual information associated with the plurality of state transition options, controlling, based on the plurality of state transition options and the contextual information associated with the plurality of state transitions options, provision of at least one control element on a user interface for controlling the mobile mining vehicle, and controlling a transition of the mobile mining vehicle from the first state to the second state based on a user input received via the at least one control element.

According to a second aspect of the invention, there is provided a method comprising: determining information on a first state of a plurality of predefined states of the mobile mining vehicle, determining, based on the first state, a plurality of state transition options for transitioning the mobile mining vehicle from the first state to a second state of the plurality of predefined states of the mobile mining vehicle, determining contextual information associated with the plurality of state transition options, controlling, based on the plurality of state transition options and the contextual information associated with the plurality of state transitions options, provision of at least one control element on a user interface for controlling the mobile mining vehicle, and controlling a transition of the mobile mining vehicle from the first state to the second state based on a user input received via the at least one control element.

According to a third aspect of the invention, there is provided a computer program comprising instructions for causing an apparatus to perform at least the following: determining information on a first state of a plurality of predefined states of the mobile mining vehicle, determining, based on the first state, a plurality of state transition options for transitioning the mobile mining vehicle from the first state to a second state of the plurality of predefined states of the mobile mining vehicle, determining contextual information associated with the plurality of state transition options, controlling, based on the plurality of state transition options and the contextual information associated with the plurality of state transitions options, provision of at least one control element on a user interface for controlling the mobile mining vehicle, and controlling a transition of the mobile mining vehicle from the first state to the second state based on a user input received via the at least one control element.

According to a fourth aspect of the invention, there is provided an apparatus comprising at least one processor and at least one memory including computer program code, the at least one memory and the computer program code configured to with the at least one processor, cause the apparatus at least to: determine information on a first state of a plurality of predefined states of the mobile mining vehicle, determine, based on the first state, a plurality of state transition options for transitioning the mobile mining vehicle from the first state to a second state of the plurality of predefined states of the mobile mining vehicle, determine contextual information associated with the plurality of state transition options, control, based on the plurality of state transition options and the contextual information associated with the plurality of state transitions options, provision of at least one control element on a user interface for controlling the mobile mining vehicle, and control a transition of the mobile mining vehicle from the first state to the second state based on a user input received via the at least one control element.

According to a fifth aspect of the invention, there is provided a nontransitory computer readable medium comprising program instructions for causing an apparatus to perform at least the following: determining information on a first state of a plurality of predefined states of the mobile mining vehicle, determining, based on the first state, a plurality of state transition options for transitioning the mobile mining vehicle from the first state to a second state of the plurality of predefined states of the mobile mining vehicle, determining contextual information associated with the plurality of state transition options, controlling, based on the plurality of state transition options and the contextual information associated with the plurality of state transitions options, provision of at least one control element on a user interface for controlling the mobile mining vehicle, and controlling a transition of the mobile mining vehicle from the first state to the second state based on a user input received via the at least one control element.

According to a sixth aspect of the invention, there is provided a computer readable medium comprising program instructions for causing an apparatus to perform at least the following: determining information on a first state of a plurality of predefined states of the mobile mining vehicle, determining, based on the first state, a plurality of state transition options for transitioning the mobile mining vehicle from the first state to a second state of the plurality of predefined states of the mobile mining vehicle, determining contextual information associated with the plurality of state transition options, controlling, based on the plurality of state transition options and the contextual information associated with the plurality of state transitions options, provision of at least one control element on a user interface for controlling the mobile mining vehicle, and controlling a transition of the mobile mining vehicle from the first state to the second state based on a user input received via the at least one control element.

### BRIEF DESCRIPTION OF THE DRAWINGS

Some example embodiments will now be described with reference to the accompanying drawings:
Figure 1 shows a block diagram of an example apparatus in which examples of the disclosed embodiments may be applied;
Figure 2 shows a block diagram of another example apparatus in which examples of the disclosed embodiments may be applied;
Figure 3 shows an example loader;
Figure 4 illustrates an example method incorporating aspects of example embodiments;
Figure 5 shows an example user interface;
Figures 6A and 6B illustrate an example user interface upon controlling a mobile mining vehicle; and
Figure 7 illustrates an example state machine.

### DETAILED DESCRIPTION OF THE DRAWINGS

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Example embodiments relate to controlling a mobile mining vehicle such as an autonomous mining vehicle.

Current mobile mining vehicles are designed for human control. However, a user interface for controlling a mobile mining vehicle may be complicated with many buttons, views, controls, indicators and other content. These kinds of user interfaces may be very complex and require deep understanding of properties of the mobile mining vehicle and how the mobile mining vehicle is to be operated. This makes it easy for a user such as an operator of the mobile mining vehicle to unintentionally control the mobile mining vehicle in a way that causes an operation failure, damage to the mobile mining vehicle or the environment, is not efficient, or is not otherwise suitable in the current situation.

An example embodiment relates to an apparatus configured to determine information on a first state of a plurality of predefined states of the mobile mining vehicle, determine, based on the first state, a plurality of state transition options for transitioning the mobile mining vehicle from the first state to a second state of the plurality of predefined states of the mobile mining vehicle, determine contextual information associated with the plurality of state transition options, control, based on the plurality of state transition options and the contextual information associated with the plurality of state transitions options, provision of at least one control element on a user interface for controlling the mobile mining vehicle, and control a transition of the mobile mining vehicle from the first state to the second state based on a user input received via the at least one control element.

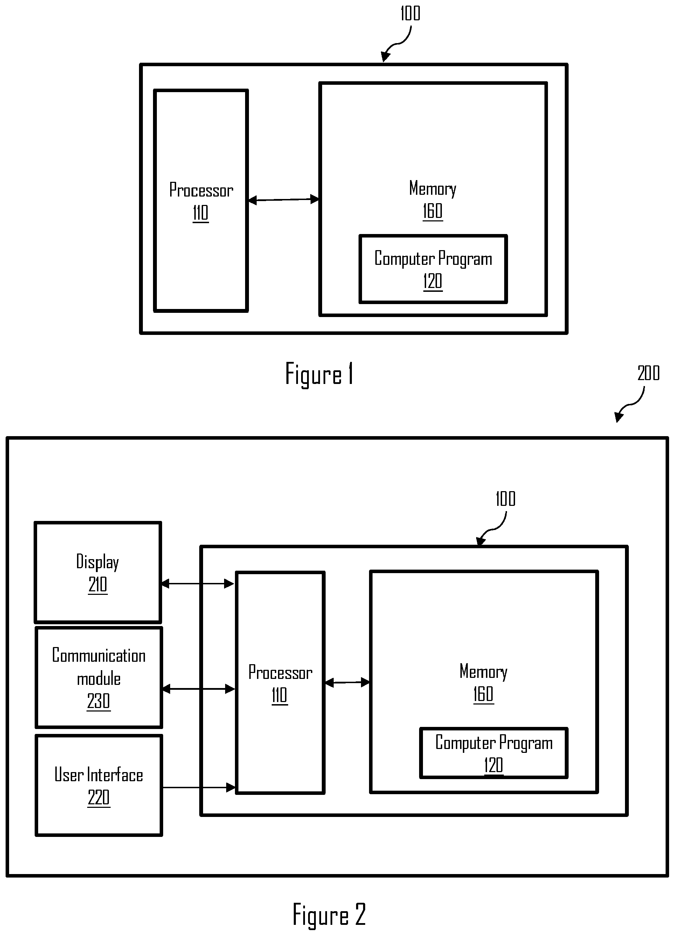

Figure 1 is a block diagram depicting an apparatus 100 operating in accordance with an example embodiment of the invention. The apparatus 100 may be, for example, an electronic device such as a module comprised by an automation or control system, a chip or a chipset. The apparatus 100 comprises one or more control circuitry, such as at least one processor 110 and at least one memory 160, including one or more algorithms such as computer program instructions 120 wherein the at least one memory 160 and the computer program instructions are configured, with the at least one processor 110 to cause the apparatus to carry out any of example functionalities described below.

In the example of Figure 1, the processor 110 is a control unit operatively connected to read from and write to the memory 160. The processor 110 may also be configured to receive control signals received via an input interface and/or the processor 110 may be configured to output control signals via an output interface. In an example embodiment the processor 110 may be configured to convert the received control signals into appropriate commands for controlling functionalities of the apparatus.

The at least one memory 160 stores computer program instructions 120 which when loaded into the processor 110 control the operation of the apparatus 100 as explained below. In other examples, the apparatus 100 may comprise more than one memory 160 or different kinds of storage devices.

Computer program instructions 120 for enabling implementations of example embodiments of the invention or a part of such computer program instructions may be loaded onto the apparatus 100 by the manufacturer of the apparatus 100, by a user of the apparatus 100, or by the apparatus 100 itself based on a download program, or the instructions can be pushed to the apparatus 100 by an external device. The computer program instructions may arrive at the apparatus 100 via an electromagnetic carrier signal or be copied from a physical entity such as a computer program product, a memory device or a record medium such as a USB stick, a Compact Disc (CD), a Compact Disc Read-Only Memory (CD-ROM), a Digital Versatile Disk (DVD) or a Blu-ray disk.

Figure 2 is a block diagram depicting an apparatus 200 in accordance with an example embodiment of the invention. The apparatus 200 may be an electronic device such as a module comprised by an automation system or a control system, a Personal Computer (PC), a laptop, a desktop, a wireless terminal, a communication terminal, a computing device or the like. In the examples below it is assumed that the apparatus 200 is a control apparatus for controlling a mobile mining vehicle.

In the example embodiment of Figure 2, the apparatus 200 is illustrated as comprising the apparatus 100, a display 210, a user interface 220 for interacting with the computing device 200 and a communication module 230.

The display 210 may also be configured to act as a user interface. For example, the display may be a touch screen display. Additionally or alternatively, the user interface may also comprise a manually operable control such as a button, a key, a touch pad, a joystick, a stylus, a pen, a roller, a rocker, a keypad, a keyboard, a game pad or any suitable input mechanism for inputting and/or accessing information. In an example embodiment, the display 210 and/or the user interface 220 may be external to the apparatus 200, but in communication with it. For example, the display 210 and/or the user interface 220 may be located in a remote operator room, or the like.

The apparatus 200 may be configured to communicate, using the communication module 230, with one or more other devices such as different sensors and/or control units. Communication may comprise receiving and/or transmitting data via a wireless or wired connection. The communication module 230 may further be configured to establish radio communication with another device using, for example, a cellular network, a Bluetooth, WiFi connection, ultrawide band (UWB) connection, chirp-spread-spectrum (CSS) connection, and/or the like.

According to an example embodiment, the apparatus 200 is operatively connected to a mobile mining vehicle. For example, the apparatus 200 may comprise a control unit that is part of an automation system controlling the mobile mining vehicle.

The mobile mining vehicle may comprise an automated mining vehicle such as an autonomous mining vehicle that is configured to perform at least some tasks autonomously. An automated mining vehicle operating in an autonomous mode may be configured to, for example, receive a task to be performed, perceive the environment of the mobile mining vehicle and autonomously perform the task while taking the environment into account. An automated mining vehicle operating in an automatic mode may be configured to operate independently but may be taken under external control at certain operation areas or conditions, such as during states of emergencies.

The mobile mining vehicle may comprise a work machine such as a lorry, dozer, dumper, van, mobile rock drilling or milling rig, mobile reinforcement machine, a bucket loader, or some other kind of mobile mining vehicle.

According to an example embodiment, the apparatus 200 is configured to receive information on the mobile mining vehicle. The apparatus 200 may be configured to receive information on the mobile mining vehicle from different sources such as measurement data provided by one or more sensors, data provided by an algorithm, simulated data, data provided by a state machine or the like. Measurement data may comprise raw data or processed data.

According to an example embodiment, the apparatus 200 is configured to communicate with a state machine controlling operations performed by the mobile mining vehicle.

A state machine comprises a software component that models system behavior by defining a finite set of predefined states of the system and transition between the states. A state machine may comprise, for example, a finite-state machine (FSM) that is configured be in one of a finite number of states at a given time. As another example, a state machine may comprise a hierarchical state machine (HSM) that may comprise hierarchically nested states comprising one or more substates and superstates. A substate comprises a state that can be active when its superstate is active. A superstate may comprise one or more substates. Therefore, if a system is in a substate it may also be in a superstate. A state in a HSM may comprise another state machine.

A state machine may comprise, for example, a main state machine application of the mobile mining vehicle configured to control an overall mission logic of the mobile mining vehicle. A state machine may be configured to control other state machines such as a main state machine may be configured to control state machines controlling mining operations.

Communicating with a state machine may comprise, for example, requesting information on a state stored by the state machine and/or receiving information on a state stored by the state machine. The state machine may be implemented in, for example, the apparatus 200 or a server located within the mobile mining vehicle and being operatively connected to the apparatus 200.

A state comprises a description of a status of a system such as the mobile mining vehicle that is performing an operation or waiting a transition from a first state to a second state. An FSM and HSM may comprise a start state, an end state and a number of intermediate states. A state may further have substates. For example, assuming a mobile mining vehicle comprises a main state for automatic setup, the automatic setup state may comprise substates relating to setup of different mining operations such as teleoperation, autonomous drilling or autonomous transition.

A state may further define events that trigger a transition from a first state to a second state and/or one or more actions that occur when the state machine enters or exists the state. Therefore, a system may transition from one state to another state based on a condition or trigger event.

A transition comprises a definition of how the state machine reacts when a condition for a state transition is fulfilled or how the state machine reacts to an event that triggers a transition of the state machine from a first state to a second state. A definition of how the state machine reacts may comprise, for example, a definition of at least one state into which the state machine is configured to transition upon fulfillment of a predefined condition or upon occurrence of a predefined event. For example, a transition may define that the state machine exits a first state and enters a second state in response to a predefined event. As another example, a transition may comprise a definition that the state machine exists the first state and enters the second state when a predefined condition is fulfilled. A transition may further comprise a definition of actions that occur upon the transition.

According to an example embodiment, the apparatus 200 is configured to enable a dialogue between the mobile mining vehicle and a user such as an operator of the mobile mining vehicle. An operator of the mobile mining vehicle may comprise a local operator or a remote operator. The operator may, for example, instruct the mobile mining vehicle to perform one or more autonomous tasks.

According to an example embodiment, enabling a dialogue between the mobile mining vehicle and the user comprises determining a state of the mobile mining vehicle and controlling, based on the state of the mobile mining vehicle, provision of at least one user interface element on a user interface for controlling the mobile mining vehicle. The at least one user interface element may comprise a single user interface element or a plurality of user interface elements for controlling the mobile mining vehicle.

The apparatus 200 may be configured to control provision of the at least one user interface element on a user interface within the mobile mining vehicle such as the user interface 220 and/or on a remote user interface such as a user interface in a control room.

Controlling provision of at least one user interface element may comprise, for example, presenting one or more questions to the operator and providing response options for the questions. The apparatus 200 may be configured to provide the questions and response options based on a state of the mobile mining vehicle.

Without limiting the scope of the claims, an advantage of providing response options for questions based on a state of the mobile mining vehicle is that information irrelevant in the situation may be excluded by providing a limited number of relevant response options relating to the state of the mobile mining vehicle and, therefore, a number of mistakes by the operator in controlling the mobile mining vehicle may be reduced.

As explained above, the apparatus 200 may be configured to control provision of at least one user interface element on the user interface. A user interface element may comprise, for example, a control element enabling interaction with the mobile mining vehicle or an information element providing information on a state of the mobile mining vehicle. An information element may provide, for example, one or more instructions for the user and/or one or more status updates relating to the mobile mining vehicle. A user interface element may further comprise a combination of a control element and an information element.

According to an example embodiment, the apparatus 200 is configured to determine a state of the mobile mining vehicle. Determining a state of the mobile mining vehicle may comprise, for example, receiving information on the state from a state machine or determining the state based on information received from the state machine.

A state of the mobile mining vehicle may comprise, for example, a current state of the mobile mining vehicle. A current state of the mobile mining vehicle may comprise, for example, an idle state. An idle state comprises a state of the mobile mining vehicle wherein the mobile mining vehicle is waiting for a signal to start an operation. As another example, a current state of the mobile mining vehicle may comprise an operation state. An operation state of the mobile mining vehicle may comprise, for example, a state relating to a predefined operation of the mobile mining vehicle such as an autonomous operation for performing a task assigned to the mobile mining vehicle.

According to an example embodiment, the apparatus 200 is configured to determine information on a first state of a plurality of predefined states of the mobile mining vehicle.

Determining information on the first state of a plurality of predetermined states may comprise requesting information on a state of the mobile mining vehicle from a state machine controlling operation of the mobile mining vehicle. The apparatus 200 maybe configured to determine the information on the first state of the plurality of predefined states based on information received from the state machine or based on information received from the mobile mining vehicle.

According to an example embodiment, information on the first state comprises a state stored by a state machine as a state of the mobile mining vehicle. A state of the mobile mining vehicle may comprise, for example, a current state of the mobile mining vehicle.

According to an example embodiment, the first state comprises an idle state. According to another example embodiment, the first state comprises an operation state of the mobile mining vehicle.

An operation state of the mobile mining vehicle may comprise a state determined based on a phase of a work cycle of the mobile mining vehicle. A work cycle of the mobile mining vehicle may comprise, for example, operations for performing a task assigned to the mobile mining vehicle such as drilling a hole, moving from a first location to a second location, and/or the like.

According to an example embodiment, the operation state comprises at least one of the following: autonomous driving, automatic set up, autonomous drilling, teleoperation of booms, or teleoperated driving.

Without limiting the scope of the claims, an advantage of determining information on a state of the mobile mining vehicle is that, based on the state of the mobile mining vehicle, it is possible detect that a particular event and/or one or more conditions for entering the state are successfully fulfilled. Therefore, there is no need to constantly monitor, for example, sensory data, threshold values, inputs received by the mobile mining vehicle and/or outputs provided by the mobile mining vehicle at least as long as the state is maintained.

According to an example embodiment, the apparatus 200 is configured to determine, based on the first state, a plurality of state transition options for transitioning the mobile mining vehicle from the first state to a second state of the plurality of predefined states of the mobile mining vehicle.

The plurality of state transition options may comprise, for example, a plurality of allowed transitions associated with the first state. An allowed transition associated with a state may comprise an allowed transition defined by the state. For example, the first state may comprise information on one or more allowed state transitions from the first state. Determining a plurality of state transition options for transitioning the mobile mining vehicle from the first state to a second state may comprise determining state transitions allowed from the first state.

According to an example embodiment, the second state comprises an idle state. According to another example embodiment, the second state comprises an operation state of the mobile mining vehicle.

According to an example embodiment, the first state is different from the second state. For example, the first state and the second state may comprise different operation states.

According to an example embodiment, at least one of the first state and/or the second state comprises an operation state of the mobile mining vehicle.

The apparatus 200 may be configured to determine information associated with the plurality of state transition options. The information associated with the plurality of state transition options may comprise, for example, information relating to operation of the mobile mining vehicle. As another example, information associated with the plurality of state transition options may comprise information on one or more parameters of the mobile mining vehicle when operating in a state corresponding to a state transition option.

According to an example embodiment, the apparatus 200 is configured to determine contextual information associated with the plurality of state transition options.

Determining contextual information associated with the plurality of state transition options may comprise, for example, determining information on operation of the mobile mining vehicle in a plurality of states corresponding to the plurality of state transition options. For example, determining contextual information with the plurality of state transition options may comprise determining a subsystem of the mobile mining vehicle associated with a state transition option. Determining a subsystem of the mobile mining vehicle associated with a state transition option may comprise, for example, determining one or more parameters relating to the subsystem, one or more actuators controlled by the subsystem, or the like.

Contextual information associated with the plurality of state transition options may relate to information for enabling a safe transition from the first state to the second state. For example, the apparatus 200 may be configured to determine, based on the contextual information, that a transition of the mobile mining vehicle from the first state to the second state may be performed in a controlled and safe manner.

Contextual information associated with the plurality of state transition options may comprise, for example, information on one or more subsystems or parameters relating to the one or more subsystems.

According to an example embodiment, the contextual information associated with the plurality of state transition options comprises at least one of the following: information on a state of at least one subsystem of the mobile mining vehicle and/or at least one state transition condition to be fulfilled for transitioning the mobile mining vehicle from the first state to the second state.

A state transition condition may comprise, for example, one or more actions to be performed to enable safe transition from the first state to the second state. The one or more actions may relate to the first state and/or the second state. The one or more actions may comprise, for example, determining that one or more parameter values are acceptable for transitioning from the first state to the second state, determining a current state of one or more subsystems or components of the mobile mining vehicle, or the like.

For example, a state transition condition for autonomous driving may comprise a condition that a physical key in the mobile mining vehicle needs to be in a correct position or that a driveline high voltage system needs to be up.

According to an example embodiment, the at least one state transition condition comprises completion of one or more required actions before exiting the first state and/or completion of one or more required actions before entering the second state.

The one or more required actions may relate to, for example, safe operation of the mobile mining vehicle. For example, a safe transition from the first state to the second state of the mobile mining vehicle may comprise ensuring that the mobile mining vehicle is stable by determining that, for example, jacks of the mobile mining vehicle are in contact with the ground. As another example, the one or more require actions may comprise checking that the safety system of the mobile mining vehicle is activated.

According to an example embodiment, the apparatus 200 is configured to determine one or more required state transition conditions that are not fulfilled. The apparatus 200 may further be configured to, in response to determining that the one or more state transition conditions are not fulfilled, determine necessary actions for fulfilling the state transition conditions that are not fulfilled. Fulfilling a state transition action may require one or more inputs from the operator or the apparatus 200 may be able to fulfill the state transition action independently.

According to an example embodiment, the apparatus 200 is configured to prompt an operator to perform an action to fulfil at least one state transition condition. For example, the apparatus 200 may be configured to prompt the operator to turn a physical key in the mobile mining vehicle to a correct position to enable autonomous driving.

According to an example embodiment, the apparatus 200 is configured to perform an action to fulfil the at least one state transition condition. For example, the apparatus 200 may be configured to start a high voltage system required to enable autonomous driving, in response to detecting that the high voltage system is not started.

According to an example embodiment, the apparatus 200 is configured to control a user interface based on a state of the mobile mining vehicle and/or the plurality of state transition options. Controlling a user interface may comprise providing instructions for the user interface to enable interaction with the mobile mining vehicle via the user interface.

Instructions for the user interface to enable interaction with the mobile mining vehicle via the user interface may comprise, for example, instructions to provide at least one user interface element on the user interface. A user interface element may comprise, for example, a control element enabling interaction with the mobile mining vehicle or an information element providing information on a state of the mobile mining vehicle.

According to an example embodiment, the apparatus 200 is configured to control, based on the plurality of state transition options and the contextual information associated with the plurality of state transitions options, provision of at least one control element on a user interface for controlling the mobile mining vehicle.

Controlling provision of at least one control element based on a plurality of state transition options and contextual information associated with the plurality of state transition options may comprise, for example, providing one or more control elements relating to a state transition option provided that, for example, a state transition condition relating to the state transition option is fulfilled. As another example, controlling provision of at least one control element based on a plurality of state transition options and contextual information associated with the plurality of state transition options may comprise, for example, providing one or more control elements relating to a state transition option provided that, for example, a transition from a current state of the subsystem is allowed.

Controlling provision of the at least one control element on a user interface may comprise enabling control of the mobile mining vehicle using the at least one control element, controlling a location of the at least one control element on the user interface, controlling an appearance of the at least one control element, controlling a number of control elements provided on the user interface, or the like.

The control element may comprise a user interface element such as a graphical element such as a button, a checkbox, a dropdown menu, an element for enabling voice control, or the like.

According to an example embodiment, the at least one control element comprises at least one multiple choice element.

According to an example embodiment, the at least one control element comprises an element for interacting with the mobile mining vehicle. For example, the at least one control element may comprise a user interface element for causing a transition of the mobile mining vehicle from the first state to the second state.

Without limiting the scope of the claims, an advantage of controlling provision of at least one control element on a user interface is that unnecessary control elements may be excluded from the user interface and the user interface may be adapted based on the context of the mobile mining vehicle. Another advantage is that a simplified user interface may be provided, thereby enabling reducing the number of unintentional inputs from the operator.

As explained above, the apparatus 200 may be configured to control provision of different types of user interface elements such as control elements and/or information elements on the user interface. While a control element may enable control of the mobile mining vehicle, an information element may provide information on a state of the mobile mining vehicle.

According to an example embodiment, the apparatus 200 is configured to control provision of at least one information element on the user interface based on at least one of the plurality of predefined states of the mobile mining vehicle.

An information element may provide, for example, one or more instructions for the user and/or one or more status updates relating to the mobile mining vehicle. For example, the apparatus 200 may be configured to control provision of information elements relating to starting a high voltage system by providing an information element indicating that the high voltage system is being started or that the high voltage system is up.

According to an example embodiment, the at least one information element comprises at least one of the following: a request for a user, a status update relating to the mobile mining vehicle and/or an instruction for the user. For example, when the mobile mining vehicle is in an idle state, the apparatus 200 may be configured to provide an information element requesting the operator to provide instructions on what to do next.

The apparatus 200 may be configured to control provision of user interface elements such as information elements and/or control elements by providing a user interface element with adapted content. Providing a user interface element with adapted content may comprise, for example, determining a state of the mobile mining vehicle and determine an expression in a natural language corresponding to the state of the mobile mining vehicle. The apparatus 200 may be configured to determine the expression in a natural language based on information stored in a database. Adapted content may comprise, for example, a status of the mobile mining vehicle in a natural language such as "I'll be in the target location in 5 minutes" or "Drilling should take less than 3 hours".

Without limiting the scope of the claims, an advantage of controlling provision of an information element on a user interface is that an operator may be provided with, for example, status updates relating to a state of the mobile mining vehicle in an understandable manner.

The apparatus 200 may be configured to store information on interaction occurred via the user interface. Information on interaction may comprise information about one or more user interface elements provided on the user interface and/or one or more user inputs received via the user interface.

According to an example embodiment, the apparatus 200 is configured to store information on the user input received via the at least one control element.

Information on a user input received via a control element may comprise, for example, information on a control element selected by the user, information on a type of the user input, information on a duration of the input, and/or the like.

According to an example embodiment, the apparatus 200 is configured to store information on the at least one information element provided on the user interface.

Information on an information element may comprise, for example, information on contents of the information element, a type of the information element, and/or the like.

Without limiting the scope of the claims, an advantage of storing information on the at least one user input received via the at least one control element and information on at least one information element provided on the user interface is that history information relating to operation and controlling the mobile mining vehicle maybe stored. The stored information maybe reviewed, for example, in case of accident investigations and/or for optimizing operation of the mobile mining vehicle.

The apparatus 200 may be configured present the stored information on the user input received via the at least one control element and information on the at least one information element provided on the user interface for the operator as a log of previous actions and selections made by the operator.

According to an example embodiment, the apparatus 200 is configured to present information about the at least one user input received via the at least one control element and information about at least one information element provided on the user interface as a dialogue.

Presenting information on the at least one user input received via the at least one control element and information on at least one information element provided on the user interface as a dialogue may comprise presenting the stored information as messages in a chat box. For example, the apparatus 200 may be configured to control provision of stored information such that inputs received via the at least one control element are organized as responses to content presented by the information elements. In other words, the operator may control the mobile mining vehicle like participating in a conversation.

Without limiting the scope of the claims, an advantage of presenting the stored information on at least one user input received via the at least one control element and information on at least one information element provided on the user interface is that the operator can follow the operation of the mobile mining vehicle and notice how different inputs affect the operation of the mobile mining vehicle without a need to monitor, for example, changes in measurement data.

According to an example embodiment, the apparatus 200 is configured to control the mobile mining vehicle based on one or more user inputs received via one or more control elements.

According to an example embodiment, the apparatus 200 is configured to control a transition of the mobile mining vehicle from the first state to the second state based on a user input received via the at least one control element.

Controlling a transition of the mobile mining vehicle from the first state to a second state may comprise, for example, initiating one or more mining operations of the mobile mining vehicle or controlling one or more subsystems of the mobile mining vehicle.

According to an example embodiment, the apparatus 200 comprises means for performing features of the apparatus 200, wherein the means for performing comprises at least one processor 110, at least one memory 160 including computer code 120 configured to, with the at least one processor 110, cause the performance of the apparatus 200.

According to an example embodiment, the apparatus 200 comprises means for determining information on a first state of a plurality of predefined states of the mobile mining vehicle, means for determining, based on the first state, a plurality of state transition options for transitioning the mobile mining vehicle from the first state to a second state of the plurality of predefined states of the mobile mining vehicle, means for determining contextual information associated with the plurality of state transition options, means for controlling, based on the plurality of state transition options and the contextual information associated with the plurality of state transitions options, provision of at least one control element on a user interface for controlling the mobile mining vehicle, and means for controlling a transition of the mobile mining vehicle from the first state to the second state based on a user input received via the at least one control element.

The apparatus 200 may further comprise means for prompting an operator to perform an action to fulfil at least one state transition condition and/or to perform an action to fulfil the at least one state transition condition, means for storing information on the user input received via the at least one control element and means for controlling provision of at least one information element on the user interface based on at least one of the plurality of predefined states of the mobile mining vehicle and/or means for storing information on the at least one information element provided on the user interface.

The apparatus 200 may further comprise means for presenting information on at least one user input received via the at least one control element and information on at least one information element provided on the user interface as a dialogue and/or means for controlling the user interface based on the plurality of predefined states of the mobile mining vehicle.

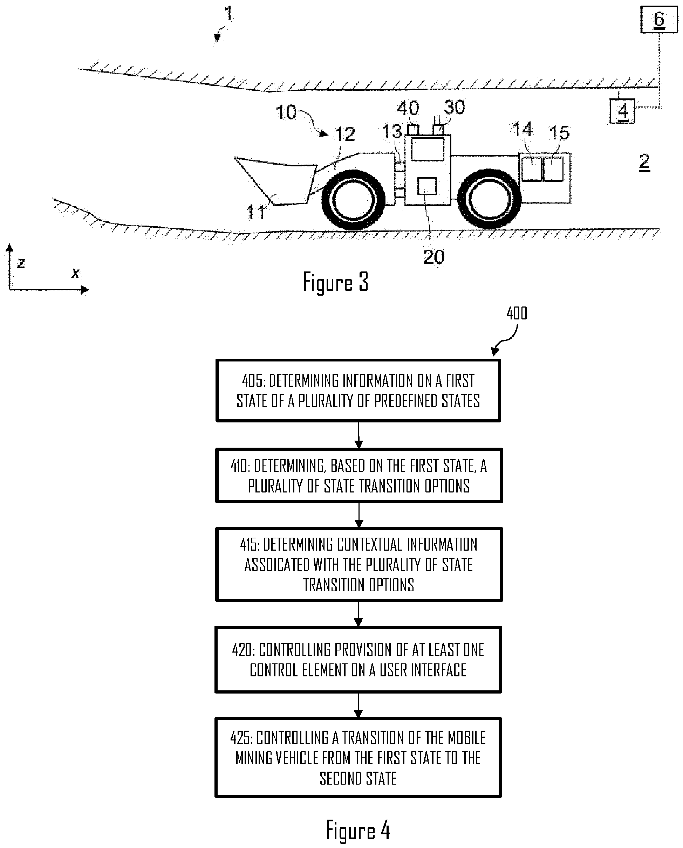

Figure 3 illustrates an example of a portion of a mining worksite 1 such as a portion of an underground tunnel 2 or an on-surface area where a mobile mining vehicle 10 is operating. The mining worksite may comprise an ore mine or a construction site such as a railway of road tunnel site.

A mobile mining vehicle may comprise a work machine such as a lorry, dozer, dumper, van, mobile rock drilling or milling rig, mobile reinforcement machine, a bucket loader, or other kind of mobile mining vehicle.

In the example of Figure 3, the mobile mining vehicle comprises a loader or a load and haul (LHD) vehicle comprising a bucket 11 connected to a boom 12. The vehicle 10 may be, for example, an articulated vehicle comprising two sections connected by a joint 13.

In the example of Figure 3, the vehicle 10 comprises a system 14 of pumps for generating hydraulic pressure for operating various parts of the machine, such as lifting the boom 12, turning the bucket 11, or the like. The vehicle 10 may comprise one or more other sources of energy, such as an accumulator, a hydrogen container, a fuel tank, etc. The vehicle 10 may comprise a motor 15, such as a combustion engine or an electric motor. Power from the motor 15 may be provided by a crank shaft to front and/or rear wheels either directly or via a gear box. A drivetrain of the vehicle 10 may comprise, for example, motor 15, the crank shaft, and/or a transmission.

The vehicle 10 comprises at least one control unit 20 such as the apparatus 200 configured to control at least some functions and/or actuators of the vehicle. The control unit 20 may comprise one or more computing units/processors executing computer program code stored in memory. The control unit 20 may be connected to one or more other control units of a control system of the vehicle, for example, by a controller area network (CAN) bus. The control unit 20 may comprise or be connected to a user interface (UI) with a display device as well as an operator input interface. Such interfaces are usable for receiving operator commands and information to the control unit 20.

The vehicle 10 may comprise a wireless communication device 30 such as the communication module 230, by which the control unit 20 and/or another unit of control system of the vehicle 10 may be configured to establish a data connection. The data connection comprises at least one of: data reception, and/or data transmission. The data connection may be formed between the control system of the vehicle and at least one control device of a control system 6 external to the vehicle. The data connection may utilize a wireless connection provided by a base station or an access node 4. The communication device 30 may thus be operatively connected to a communications system of the worksite, such as a wireless access system comprising a wireless local area network (WLAN) and/or a cellular communications network such as a 4G, 5G or some other generation cellular network.

The control system 6 may comprise or be connected to one or more further networks and/or data processing systems, such as a worksite management system, a cloud service, a data analytics system, an intermediate communications network, such as the internet. The control system 6 may comprise or be connected to one or more further devices or control units, such as a handheld user unit, a vehicle unit, a worksite management device/system, a remote control and/or monitoring device, data analytics device, sensor system/device, or the like.

The vehicle 10 may be unmanned. An unmanned vehicle may comprise a user interface to allow a user to control any of the functions of the vehicle, for example, steering. The vehicle may comprise an operator input interface in addition to the user interface or as an alternative to the user interface. Said interfaces of the vehicle may be located in a remote location from the vehicle and the vehicle may be remotely controlled. Examples of remote control include, for example, control by an operator in the tunnel, control by an apparatus within a control room at the worksite, or even control by an apparatus from a long distance away from the worksite via one or more communications networks. The vehicle 10 may be an automated vehicle, which is configured to operate or drive in an autonomous operating or driving mode independently without requiring continuous user control. Such an automated vehicle may be taken under external control, for example, during states of emergencies. When the vehicle is in a manual driving mode, an operator drives the vehicle manually, by remote control or locally at the vehicle by operator controls. The operator may set the vehicle into an automatic driving mode in which the vehicle is configured to automatically drive a specified route, for example, between a loading point and a dump shaft.

Apparatuses of the worksite, such as the one or more control devices of the control system 6 and/or the mining vehicle 10, may be configured to store and use at least one worksite model representing a current state and/or target state of the worksite environment. The worksite model may be an environment model or a map. The worksite model may be a two-dimensional (2D) model or a three-dimensional (3D) model indicative of surface profiles and obstacles at the worksite, at an area operated by mining vehicles, for example. In the case of an underground worksite, the worksite model may be a tunnel model comprising information on tunnel profiles.

According to an example embodiment, the control system 6 and/or the mining vehicle 10 is configured to store a 3D model of the underground worksite, illustrating different parts of tunnels such as floors, walls, and ceilings of the tunnel network. The 3D model may comprise or be formed based on point cloud data generated based on scanning the environment of mining vehicle 10. In some other embodiments, the 3D model may be stored in some other format, such as a mesh model comprising vertices, edges and faces. In some embodiments, the 3D model may be a design model or may be generated based on a design model, such as a computer aided design (CAD) model, created by a mine designing software or a 3D model created on the basis of tunnel lines and profiles designed in a drill and blast design software.

The vehicle 10 may comprise one or more sensors, or scanners 40, configured to perform scanning of environment around the vehicle. The scanning results may be applied to detect the position and orientation of the vehicle and one or more further elements thereof, such as the position and orientation of the scanner 40, or the bucket 11.

The control unit 20 may be configured to compare scanned tunnel profile data to reference profile data stored in the worksite model. The control unit 20 may be configured to position the mining vehicle on the basis of finding a match in a surface profile indicated by the scanning data and surface profile indicated by the worksite model. The control unit 20 may be configured to correct positioning by dead-reckoning based on scanning-based positioning.

In the example of Figure 3, the scanner 40 may be a 2D scanner configured to monitor tunnel walls at desired height, for example. The mining vehicle 10 maybe configured to apply a 2D worksite model, for monitoring position of the mining vehicle based on environment scanning by a 2D scanner comprised by the mining vehicle. Alternatively, the scanner 40 may be a 3D scanner, such as a light detection and ranging (LIDAR) device, configured to generate 3D scanning data or point cloud data.

Figure 4 illustrates an example method 400 incorporating aspects of the previously disclosed embodiments. More specifically, the example method 400 illustrates forming a combined set of measurement data. In the example of Figure 4, the method is a computer-implemented method performed by the apparatus 200.

The method starts with determining 405 information on a first state of a plurality of predefined states of the mobile mining vehicle.

Information on the first state of the plurality of predefined states may comprise determining the information based on information received from a state machine or based on information received from the mobile mining vehicle.

In the example of Figure 4, determining information on the first state of a plurality of predetermined states may comprise, for example, requesting information on a state of the mobile mining vehicle from the state machine controlling operation of the mobile mining vehicle.

The first state may comprise, for example, a current state of the mobile mining vehicle such as an idle state or an operation state.

The method continues with determining 410, based on the first state, a plurality of state transition options for transitioning the mobile mining vehicle from the first state to a second state of the plurality of predefined states of the mobile mining vehicle.

Determining a plurality of state transition options for transitioning the mobile mining vehicle from the first state to a second state may comprise determining state transitions allowed from the first state.

The second state may comprise an idle state or an operation state of the mobile mining vehicle. However, in the example of Figure 4, the second state is different from the first state.

The method continues with determining 415 contextual information associated with the plurality of state transition options.

Contextual information associated with the plurality of state transition options may comprise, for example, information on one or more subsystems or parameters relating to the one or more subsystems.

Determining contextual information associated with the plurality of state transition options may comprise, for example, determining a subsystem of the mobile mining vehicle associated with a state transition option such as determining one or more parameters relating to the subsystem, one or more actuators controlled by the subsystem, or the like.

In the example of Figure 4, the contextual information associated with the plurality of state transition options comprises at least one of the following: information on a state of at least one subsystem of the mobile mining vehicle and/or at least one state transition condition to be fulfilled for transitioning the mobile mining vehicle from the first state to the second state.

The at least one state transition condition may comprise, for example, completion of one or more required actions before exiting the first state and/or completion of one or more required actions before entering the second state.

The method further continues with controlling 420, based on the plurality of state transition options and the contextual information associated with the plurality of state transitions options, provision of at least one control element on a user interface for controlling the mobile mining vehicle.

Controlling provision of at least one control element based on a plurality of state transition options and contextual information associated with the plurality of state transition options may comprise, for example, providing one or more control elements relating to a state transition option provided that, for example, a state transition condition relating to the state transition option is fulfilled. As another example, controlling provision of at least one control element based on a plurality of state transition options and contextual information associated with the plurality of state transition options may comprise, for example, providing one or more control elements relating to a state transition option provided that, for example, a transition from a current state of the subsystem is allowed.

The method yet further continues with controlling 425 a transition of the mobile mining vehicle from the first state to the second state based on a user input received via the at least one control element.

In the example of Figure 4, controlling a transition of the mobile mining vehicle from the first state to a second state comprises controlling one or more subsystems of the mobile mining vehicle.

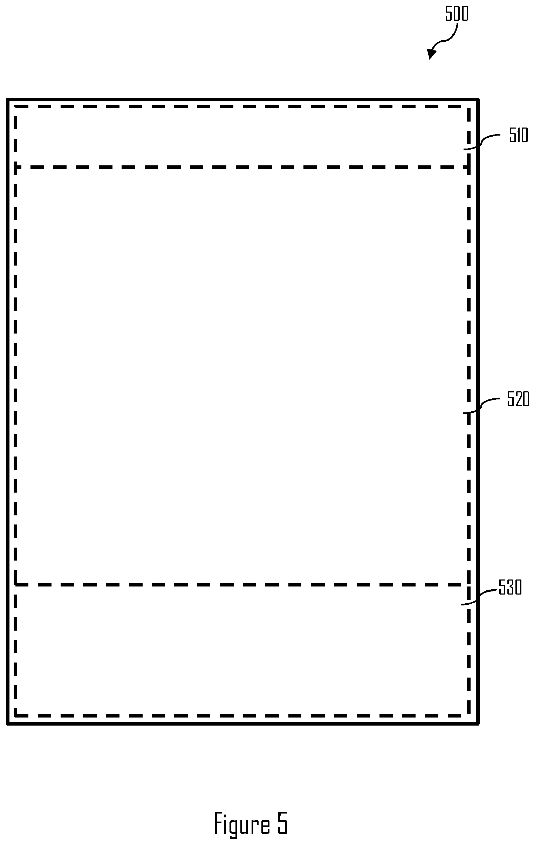

Figure 5 illustrates an example of a user interface 500 controlled by the apparatus 200 by controlling provision of one or more user interface elements such as one or more information elements and/or one or more control elements on the user interface 500. The user interface 500 comprises a user interface for controlling a mobile mining vehicle such as the mobile mining vehicle in the example of Figure 3.

The example user interface 500 comprises a plurality of sections 510, 520 and 530. In the example of Figure 5, a section comprises a dedicated area on the user interface for presenting a particular type of information.

The section 510 comprises a header for, for example, identifying a mobile mining vehicle being controlled.

The section 520 comprises a message area for presenting information elements provided by the apparatus 200 such as one or more user inputs received via at least one control element and one or more status updates relating to the mobile mining vehicle.

The section 530 comprises a contextualized control area for providing controls and/or options for the operator based on the context of the mobile mining vehicle. For example, the section 530 may comprise one or more control elements for selecting an option. As another example, the section 530 may comprise one or more control elements for aborting a mission and/or for requesting information on a current status of the mobile mining vehicle.

In the example of Figure 5, the apparatus 200 is configured to update the contextualized content area based on the state of the mobile mining vehicle.

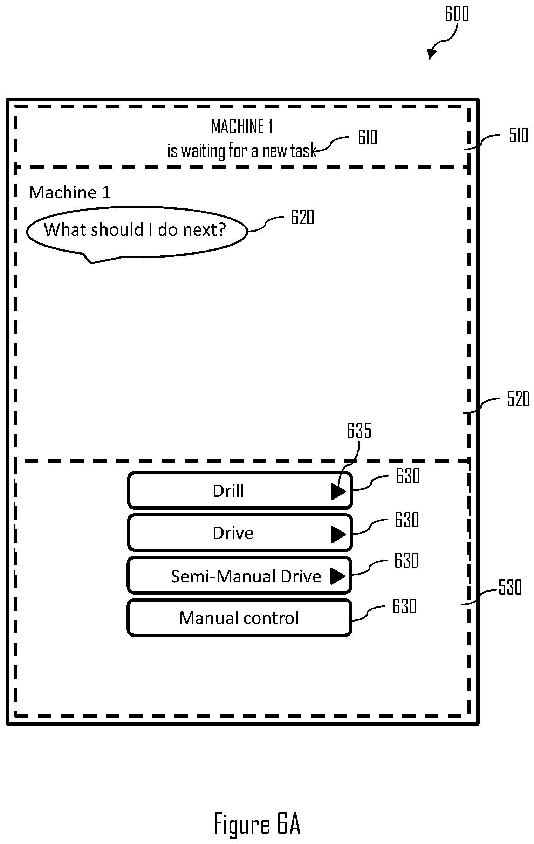

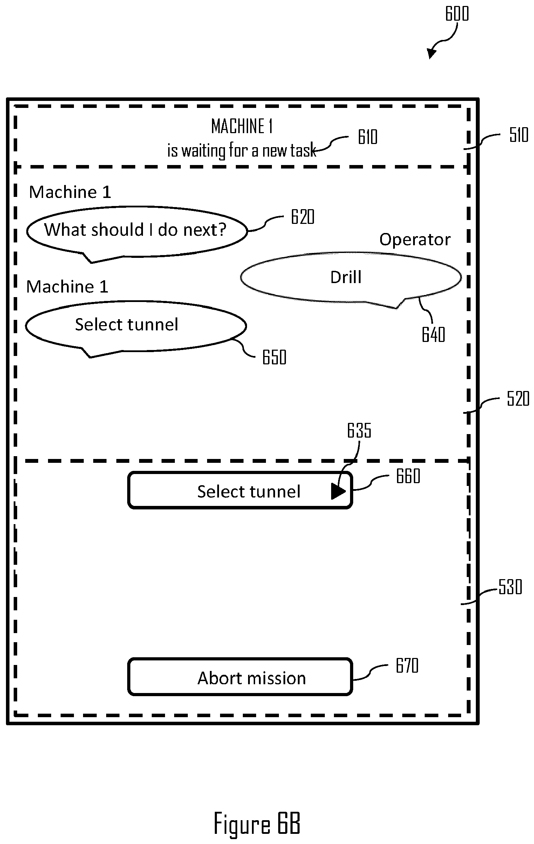

Figures 6A and 6B illustrate an example user interface 600 for controlling operation of a mobile mining vehicle. In the examples of Figures 6A and 6B, the apparatus 200 is configured to control provision of user interface elements on the user interface 600.

Similarly to Figure 5, the user interface of Figures 6A and 6B comprises a header 510 for identifying a mobile mining vehicle being controlled, a message area 520 for presenting information elements such as one or more user inputs received via at least one control element and one or more information elements provided by the apparatus 200, and a contextualized control area 530 for providing controls and/or options for the operator based on the context of the mobile mining vehicle.

Figure 6A illustrates that the operator is controlling "Machine 1" that is waiting for a new task 610. "Machine 1" may comprise, for example, an autonomous mining vehicle configured to autonomously perform one or more tasks assigned to it.

In the example of Figure 6A, the message area 520 comprises an information element 620 provided by the apparatus 200 for prompting the operator to select a task for the mobile mining vehicle. The contextualized control area 530 comprises a plurality of control elements 630 for selecting the task for the mobile mining vehicle. The control elements 630 may indicate, for example, using an icon 635, that selecting the task also requires selecting further options relating to the task.

Figure 6B illustrates that the operator has selected a "Drill" task for the "Machine 1" and selecting the task caused the apparatus 200 to prompt the operator to select a tunnel using the control element 660.

The message area comprises an information element 640 indicating that "Drill" was selected and an information element 650 indicating that the mobile mining vehicle is waiting for the operator to select a tunnel for performing the drilling.

The contextualized control area 530 comprises a control element 660 for selecting the tunnel. The contextualized control area 530 further comprises a control element 670 for aborting the mission.

In the example of Figures 6A and 6B, the apparatus 200 controls provision of the information elements in the message area such that the information elements are organized as a conversation. In the examples of Figures 6A and 6B, the apparatus 200 is configured to control provision of the user interface elements such that one or more questions are presented and response options for the questions are provided for the operator. The apparatus 200 is configured to provide the questions and response options based on a state of the mobile mining vehicle.

The apparatus 200 is further configured to store information on the information elements provided in the message area thereby storing a log of previous actions and selections made by the operator.

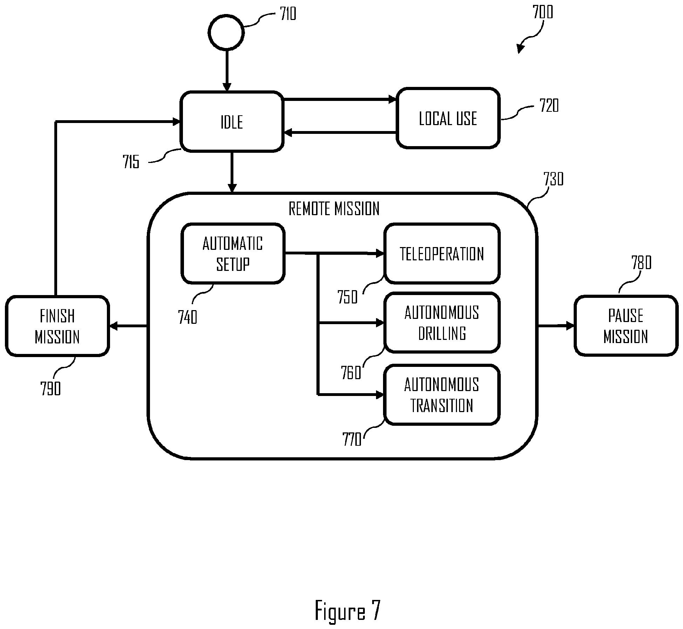

Figure 7 illustrates an example state machine 700. The example state machine 700 comprises a hierarchical state machine comprising a main state machine for controlling a mobile mining vehicle. The state machine may be implemented in the apparatus 200 or the apparatus 200 may be operatively connected to the state machine. In the example of Figure 7, the mobile mining vehicle comprises an autonomous mining vehicle.

The state machine comprises a plurality of predefined states of the mobile mining vehicle. In the example of Figure 7, the plurality of states comprises an initial state 710, an idle state 715, local use 720, remote mission 730, finish mission 790 and pause mission 780.

The remote mission 730 comprises a superstate comprising sub-states of automatic setup 740, teleoperation 750, autonomous drilling 760 and autonomous transition 770. Therefore, when, for example, the sub-state autonomous transition 770 is active, also the superstate of remote mission 730 is active.

Figure 7 further illustrates, using an arrow, an allowed transition from a first state to a second state. For example, from the idle state 715 it is allowed to transition to local use 720 or remote mission 730. As another example, from the automatic setup 740 allowed transitions comprise teleoperation 750, autonomous drilling 760 and autonomous transition 770.

As explained above, a transition from a first state to a second state may require that one or more state transition conditions are fulfilled. For example, autonomous transition 770 may require that a physical key in the mobile mining vehicle is in a "remote mission" position and the driveline high voltage system is up.

Without limiting the scope of the claims, an advantage of controlling provision of at least one control element on a user interface for controlling the mobile mining vehicle based on a plurality of state transition options and the contextual information associated with the plurality of state transitions options is that control of the mobile mining vehicle is easy for the operator. Another advantage is that providing control elements based on a state of the mobile mining vehicle and contextual information enables efficient control of a fleet of mobile mining vehicles as the operator does not need to know or remember a status of each and every mining vehicle.

Without in any way limiting the scope, interpretation, or application of the claims appearing below, a technical effect of one or more of the example embodiments disclosed herein is easier control of the mobile mining vehicle.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer-readable medium' may be any media or means that can contain, store, communicate, propagate or transport the instructions for use by or in connection with an instruction execution system, apparatus, or device, such as a computer, with one example of a computer described and depicted in FIGURE 2. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It will be obvious to a person skilled in the art that, as the technology advances, the inventive concept can be implemented in various ways. The invention and its embodiments are not limited to the examples described above but may vary within the scope of the claims.

## Claims

1. A control apparatus of a mobile mining vehicle, the apparatus comprising at least one processor and at least one memory including computer program code, the at least one memory and the computer program code configured to with the at least one processor, cause the apparatus at least to:
determine information on a first state of a plurality of predefined states of the mobile mining vehicle;
determine, based on the first state, a plurality of state transition options for transitioning the mobile mining vehicle from the first state to a second state of the plurality of predefined states of the mobile mining vehicle;
determine contextual information associated with the plurality of state transition options;
control, based on the plurality of state transition options and the contextual information associated with the plurality of state transitions options, provision of at least one control element on a user interface for controlling the mobile mining vehicle; and
control a transition of the mobile mining vehicle from the first state to the second state based on a user input received via the at least one control element.

2. The apparatus according to claim 1, wherein the contextual information comprises at least one of the following: information on a state of at least one subsystem of the mobile mining vehicle or at least one state transition condition to be fulfilled for transitioning the mobile mining vehicle from the first state to the second state.

3. The apparatus according to claim 2, wherein the at least one state transition condition comprises completion of one or more required actions before exiting the first state or completion of one or more required actions before entering the second state.

4. The apparatus according to claim 2 or 3, wherein the at least one memory and the computer program code are further configured to with the at least one processor, cause the apparatus to prompt an operator to perform an action to fulfil at least one state transition condition or to perform an action to fulfil the at least one state transition condition.

5. The apparatus according to any preceding claim, wherein the at least one memory and the computer program code are further configured to with the at least one processor, cause the apparatus to store information on the user input received via the at least one control element.

6. The apparatus according to any preceding claim, wherein the at least one memory and the computer program code are further configured to with the at least one processor, cause the apparatus to control provision of at least one information element on the user interface based on at least one of the plurality of predefined states of the mobile mining vehicle and store information on the at least one information element provided on the user interface.

7. The apparatus according to claim 6, wherein the at least one information element comprises at least one of the following: a request for a user, a status update relating to the mobile mining vehicle or an instruction for the user.

8. The apparatus according to any preceding claim, wherein the at least one memory and the computer program code are further configured to with the at least one processor, cause the apparatus to present information about the at least one user input received via the at least one control element and information about at least one information element provided on the user interface as a dialogue.

9. The apparatus according to any preceding claim, wherein at least one of the first state or the second state comprises an operation state of the mobile mining vehicle.

10. The apparatus according to claim 9, wherein the operation state comprises at least one of the following: autonomous driving, automatic set up, autonomous drilling, teleoperation of booms, or teleoperated driving.

11. The apparatus according to any preceding claim, wherein the at least one control element comprises at least one multiple choice element.

12. The apparatus according to any preceding claim, wherein the at least one memory and the computer program code are further configured to with the at least one processor, cause the apparatus to control the user interface based on the plurality of predefined states of the mobile mining vehicle.

13. A mobile mining vehicle comprising an apparatus according to any preceding claim.

14. A method comprising:
determining information on a first state of a plurality of predefined states of the mobile mining vehicle;
determining, based on the first state, a plurality of state transition options for transitioning the mobile mining vehicle from the first state to a second state of the plurality of predefined states of the mobile mining vehicle;
determining contextual information associated with the plurality of state transition options;
controlling, based on the plurality of state transition options and the contextual information associated with the plurality of state transitions options, provision of at least one control element on a user interface for controlling the mobile mining vehicle; and
controlling a transition of the mobile mining vehicle from the first state to the second state based on a user input received via the at least one control element.

15. A computer program comprising instructions for causing an apparatus to perform at least the following:
determining information on a first state of a plurality of predefined states of the mobile mining vehicle;
determining, based on the first state, a plurality of state transition options for transitioning the mobile mining vehicle from the first state to a second state of the plurality of predefined states of the mobile mining vehicle;
determining contextual information associated with the plurality of state transition options;
controlling, based on the plurality of state transition options and the contextual information associated with the plurality of state transitions options, provision of at least one control element on a user interface for controlling the mobile mining vehicle; and
controlling a transition of the mobile mining vehicle from the first state to the second state based on a user input received via the at least one control element.
